# EUROPÄISCHE PATENTSCHRIFT

(11) **EP 3 249 194 B1**
(45) Veröffentlichungstag und Bekanntmachung des Hinweises auf die Patenterteilung: **01.01.2020**
(21) Anmeldenummer: 17168905.2
(22) Anmeldetag: 02.05.2017
(51) Int. Cl.: F02B 39/14, F16N 21/00

(54) **TURBINENDRUCKVERSTÄRKER-ÖLRÜCKLAUFROHRLEITUNG**
TURBINE COMPRESSOR OIL RETURN PIPE CONDUIT
CONDUITE DE RETOUR D'HUILE D'AMPLIFICATEUR DE PRESSION DE TURBINE

(30) Priorität: 25.05.2016 CN 201620483047 U
(43) Veröffentlichungstag der Anmeldung: 29.11.2017
(73) Patentinhaber: ContiTech Fluid Shanghai Co., Ltd., Shanghai 201612 (CN)
(72) Erfinder: Zhang, Daoyang, Shanghai, 200237 1207-2 (CN); Sun, Yuxiang, Shanghai, 201600 (CN)
(74) Vertreter: Preusser, Andrea

(56) Entgegenhaltungen:
- CN-U- 201 826 763
- CN-U- 202 629 420
- CN-U- 202 806 349
- FR-A1- 2 908 154
- US-A1- 2013 213 345

## Beschreibung

Die vorliegende Erfindung betrifft das Gebiet der Motoren, konkret betrifft es eine Turbinendruckverstärker-Ölrücklaufrohrleitung.

Bei gegenwärtigen Turbinendruckverstärkersystemen für Fahrzeugmotoren ist für die Verbindung von Ölrücklaufrohrleitung und Druckverstärker in den meisten Fällen die Verwendung eines Anschlussstutzens erforderlich.

In der US 2013/21 33 45 A1 ist ein Rohrstutzen einer Ölrücklauf-Rohrleitung offenbart. Es handelt sich hier um den Endabschnitt einer Rohrleitung, wobei der Endabschnitt aus dem Rohr selbst gebildet ist. Der Rohrstutzen ist dafür konfiguriert, in eine Öffnung eines Motorblocks oder anderer Aggregate eingesteckt zu werden und mit dem Inneren der Öffnung eine fluiddichte Verbindung zu bilden. Eine radiale und/oder tangentiale Abdichtung ist beim Gegenstand der US 2013/21 33 45 A1 durch eine Stützkontur sowie eine O-Ring-Dichtung direkt zwischen dem Rohrstutzen und dem Motorblock gegeben.

Eine axiale Festlegung des Rohrstutzen ist nicht notwendig, kann aber durch eine Halteklammer realisiert werden.

Diese Halteklammer umgreift das Rohr von außen und kann mechanisch beispielsweise durch Erweitern des Rohres oder durch einen Klemmbund und eine Ringnut mit dem Rohr fest verbunden sein.

Anschlussstutzen können auch mit dem Rohrteil zu einem Ganzen verschweißt sein. Diese Art der Verbindung ist fest und zuverlässig und findet eine häufige Verwendung bei Turbinendruckverstärkersystemen.

In der CN 201 826 U ist eine äußerlich örtlich verdickte Rohrleitung für die Förderung beispielsweise von Rohöl in der Petrolindustrie offenbart. Die Rohrleitung weist jeweils einen männlichen und einen weiblichens Anschlussstutzen auf. Die Anschlussstutzen sind mittels Reibschweissung mit der Rohrleitung fest verbunden.

Die Anschlussstutzen weisen jeweils korrespondierende Gewindeabschnitte auf, die dem Standard des American Petroleum Institute (API) entsprechen. Mittels dieser Gewinde sind jeweils ein männlicher und ein weiblicher Anschlussstutzen miteinander verschraubbar, so dass die Rohleitungen gemäß der CN 201 826 U zu einer quasi beliebig langen Rohrleitungsstrecke verbindbar sind. Dazu ist immer jeweils ein männlicher Anschlussstutzen in einen weiblichen Anschlussstutzen hineingesteckt und mit diesem verschraubt.

Es gibt zahlreiche Arten der Verschweißung von Anschlussstutzen und Rohrteil, beispielsweise Kupferlöten, Argon-Bogenschweißen usw. Vor dem Verschweißen von Anschlussstutzen und Rohrteil ist es zur Steigerung der Schweißqualität und zur Erfüllung der Anforderungen bezüglich der Produktabmessungen erforderlich, eine Vormontage mit Positionierung vorzunehmen, den Schweißwinkel, die Positionen usw. festzulegen. Bei einer gegenwärtig üblichen Art der Positionierung handelt es sich um das Punktschweißen, wobei eine Spaltabstimmung zwischen Rohrteil und Anschlussstutzen Verwendung findet. Die Produktionseffizienz dieser Vorgehensweise ist relativ niedrig und bei gegenwärtigen Turbinendruckverstärker-Ölrücklaufrohrleitungen erfolgt oftmals die Verwendung von dünnwandigem Edelstahl zur hydraulischen Bildung der Rohrleitung, wobei die bei dem Punktschweißen auftretenden hohen Temperaturen leicht zu Durchschmelzen des Rohrteils führen und Leckage der Rohrleitung herbeiführen.

Die Zielsetzung der vorliegenden Erfindung besteht in der Bereitstellung einer Turbinendruckverstärker-Ölrücklaufrohrleitung, welche die Produktionseffizienz steigern und Leckagen der Rohrleitung effektiv vermeiden kann.

Die durch die vorliegende Erfindung bereitgestellte Turbinendruckverstärker-Ölrücklaufrohrleitung umfasst einen eigentlichen Körper des Ölrücklaufrohres sowie einen Anschlussstutzen, wobei der vorstehend bezeichnete Anschlussstutzen einen eigentlichen Körper des Anschlussstutzens und ein sich von dem eigentlichen Körper des Anschlussstutzens erstreckend ausgebildetes Erstreckungsteil aufweist, wobei sich das betreffende Erstreckungsteil innerhalb des eigentlichen Körpers des Ölrücklaufrohres befindet und in enger Abstimmung mit dem eigentlichen Körper des Ölrücklaufrohres einen Verbindungsabschnitt ausbildet, wobei der betreffende Verbindungsabschnitt mit einem Positionierungsbereich ausgebildet ist und wobei das Endteil des eigentlichen Körpers des Ölrücklaufrohres durch Schweißen an dem Anschlussstutzen befestigt ist, wobei es sich bei dem Positionierungsbereich um eine an der Oberfläche des Verbindungsabschnittes durch Klemmen ausgebildete Aussparung handelt.

Bevorzugt ist vorgesehen, dass 6 bis 8 der vorstehend bezeichneten Positionierungsbereiche vorgesehen sind, welche entlang der Umfangsrichtung des Verbindungsabschnitts gleichmäßig angeordnet sind.

Bevorzugt ist vorgesehen, dass der vorstehend bezeichnete eigentliche Körper des Anschlussstutzens eine Endfläche aufweist, wobei das Erstreckungsteil als Erstreckung von der betreffenden Endfläche ausgebildet ist, wobei die betreffende Endfläche an der Verbindungsstelle mit dem Erstreckungsteil mit einer Einbuchtungsrille versehen ist, wobei das Endteil des eigentlichen Körpers des Ölrücklaufrohres an der betreffenden Einbuchtungsrille durch Schweißen an dem Anschlussstutzen befestigt ist.

Bevorzugt ist vorgesehen, dass die Länge des vorstehend bezeichneten Erstreckungsteils 8 bis 12 Millimeter beträgt.

Bevorzugt ist vorgesehen, dass die Dicke des vorstehend bezeichneten Erstreckungsteils 1 bis 1,5 Millimeter beträgt.

Bevorzugt ist vorgesehen, dass die Wanddicke des vorstehend bezeichneten eigentlichen Körpers des Ölrücklaufrohres 0,3 bis 1,2 Millimeter beträgt.

Im Vergleich zum Stand der Technik befindet sich das Erstreckungsteil innerhalb des eigentlichen Körpers des Ölrücklaufrohres und bildet in enger Abstimmung mit dem eigentlichen Körper des Ölrücklaufrohres einen Verbindungsabschnitt aus, wobei durch den an dem betreffenden Verbindungsabschnitt vorgesehenen Positionierungsbereich die Positionierung von Anschlussstutzen und eigentlichem Körper des Ölrücklaufrohres erfolgt, um anschließend das Endteil des eigentlichen Körpers des Ölrücklaufrohres durch Schweißen an dem Anschlussstutzen zu befestigten. Es ist keine Positionierung durch Punktschweißen erforderlich, was die Produktionseffizienz steigert und das Durchschmelzen des Rohrteils effektiv vermeidet, sodass keine Leckagen der Rohrleitung hervorgerufen werden.

Die einen Teil der vorliegenden Anmeldung darstellenden beigefügten Abbildungen dienen der weiteren Erläuterung der vorliegenden Erfindung. Die illustrativen praktischen Ausführungsbeispiele der vorliegenden Erfindung und die Erläuterungen dienen der Interpretation der vorliegenden Erfindung, ohne in irgendeiner Weise eine Beschränkung der vorliegenden Erfindung zu bedeuten. Die Abbildungen sind wie nachstehend aufgeführt:
Abbildung 1 ist eine Schnittdarstellung der erfindungsgemäßen Turbinendruckverstärker-Ölrücklaufrohrleitung.

Abbildung 2 ist eine dreidimensionale Darstellung der erfindungsgemäßen Turbinendruckverstärker-Ölrücklaufrohrleitung aus Abbildung 1.

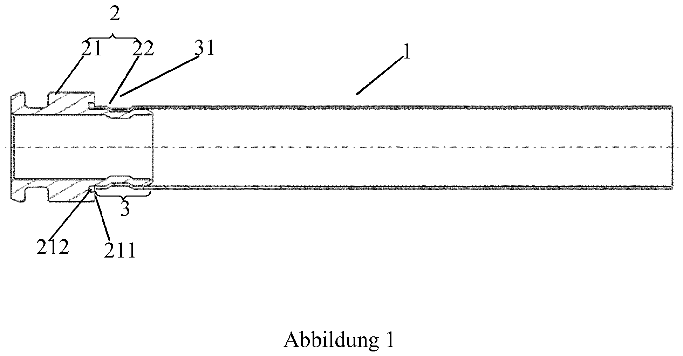

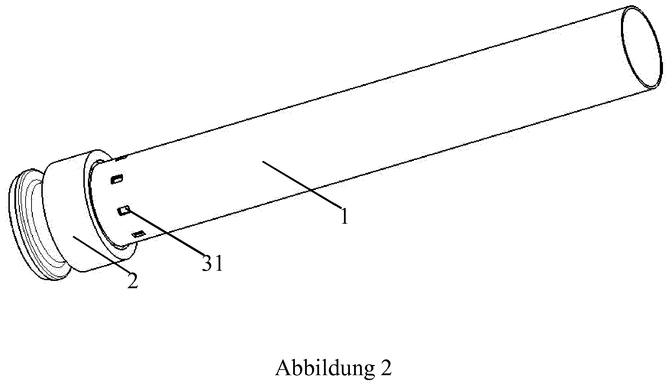

Wie in Abbildung 1 und Abbildung 2 gezeigt, umfasst die betreffende Turbinendruckverstärker-Ölrücklaufrohrleitung einen eigentlichen Körper des Ölrücklaufrohres 1 sowie einen Anschlussstutzen 2, wobei der vorstehend bezeichnete Anschlussstutzen 2 einen eigentlichen Körper 21 des Anschlussstutzens und ein sich von dem eigentlichen Körper 21 des Anschlussstutzens erstreckend ausgebildetes Erstreckungsteil 22 aufweist, wobei sich das betreffende Erstreckungsteil 22 innerhalb des eigentlichen Körpers des Ölrücklaufrohres 1 befindet und in enger Abstimmung mit dem eigentlichen Körper des Ölrücklaufrohres 1 einen Verbindungsabschnitt 3 ausbildet, wobei der betreffende Verbindungsabschnitt 3 mit einem Positionierungsbereich 31 ausgebildet ist und wobei das Endteil des eigentlichen Körpers des Ölrücklaufrohres 1 durch Schweißen an dem Anschlussstutzen 2 befestigt ist. Somit erfolgt durch den an dem vorstehend bezeichneten Verbindungsabschnitt 3 vorgesehenen Positionierungsbereich 31 die Positionierung des Anschlussstutzens 2 bezogen auf den eigentlichen Körper des Ölrücklaufrohres 1, um anschließend das Endteil des eigentlichen Körpers des Ölrücklaufrohres 1 durch Schweißen an dem Anschlussstutzen 2 zu befestigten, sodass keine Positionierung des eigentlichen Körpers des Ölrücklaufrohres 1 und des Anschlussstutzens 2 durch Punktschweißen erforderlich ist, was die Produktionseffizienz steigert, den Energieverbrach senkt und insbesondere das Durchschmelzen des eigentlichen Körpers des Ölrücklaufrohres 1 effektiv vermeidet, sodass keine Leckagen der Rohrleitung hervorgerufen werden.

Um den Anschlussstutzen 2 noch zuverlässiger bezogen auf den eigentlichen Körper des Ölrücklaufrohres 1 zu positionieren, sind 6 bis 8 der vorstehend bezeichneten Positionierungsbereiche 31 vorgesehen, welche entlang der Umfangsrichtung des Verbindungsabschnitts 3 gleichmäßig angeordnet sind.

Der vorstehend bezeichnete eigentliche Körper 21 des Anschlussstutzens weist eine Endfläche 211 auf, wobei das Erstreckungsteil 22 als Erstreckung von der betreffenden Endfläche 211 ausgebildet ist, wobei die betreffende Endfläche 211 an der Verbindungsstelle mit dem Erstreckungsteil 22 mit einer Einbuchtungsrille 212 versehen ist, wobei das Endteil des eigentlichen Körpers des Ölrücklaufrohres 1 an der betreffenden Einbuchtungsrille 212 durch Schweißen an dem Anschlussstutzen 2 befestigt ist. Somit kann ein besserer Schweißbefestigungseffekt gewährleistet werden und das Schweißmaterial wird nach dem Schmelzen in der Einbuchtungsrille 212 aufgenommen, sodass keine ästhetische Beeinträchtigung des Produkts erfolgt.

Die Länge des vorstehend bezeichneten Erstreckungsteils 22 beträgt 8 bis 12 Millimeter und die Länge des durch enge Abstimmung des betreffenden Erstreckungsteils 22 und des eigentlichen Körpers des Ölrücklaufrohres 1 ausgebildeten Verbindungsabschnitts 3 beträgt ebenfalls 8 bis 12 Millimeter. Der betreffende Längenbereich dient der Ausbildung des Positionierungsbcreiches 31 an dem Verbindungsabschnitt 3. Um einen besseren Positionierungseffekt des ausgebildeten Positionierungsabschnitts 31 zu gewährleisten, beträgt die Dicke des vorstehend bezeichneten Erstreckungsteils 22 1 bis 1,5 Millimeter. Die Wanddicke des vorstehend bezeichneten eigentlichen Körpers des Ölrücklaufrohres 1 beträgt 0,3 bis 1,2 Millimeter. Bei dem vorstehend bezeichneten Positionierungsbereich 31 handelt es sich um eine an der Oberfläche des Verbindungsabschnitts 3 durch Klemmen ausgebildete Aussparung. Somit wird eine entsprechende Beziehung zwischen dem Erstreckungsteil 22 und dem eigentlichen Körper des Ölrücklaufrohres 1 ausgebildet und der eigentliche Körper des Ölrücklaufrohres 1 wird auf diese Weise bezogen auf den Anschlussstutzen 2 positioniert.

Während der Produktion wird der Schweißring zunächst in der Einbuchtungsrille 212 vorgesehen, um anschließend das Erstreckungsteil 22 des Anschlussstutzens 2 in den eigentlichen Körper des Ölrücklaufrohres 1 einzustecken und durch enge Abstimmung mit dem eigentlichen Körper des Ölrücklaufrohres 1 den Verbindungsabschnitt 3 auszubilden. Anschließend erfolgt durch Klemmen an dem betreffenden Verbindungsabschnitt 3 die Ausbildung des Positionierungsbereiches 31, um schließlich beide im Lötofen zu verlöten, sodass das Endteil des eigentlichen Körpers des Ölrücklaufrohres 1 an der Einbuchtungsrille 212 durch Schweißen an dem Anschlussstutzen 2 befestigt wird.

Zwar erfolgte wie vorstehend aufgeführt eine Offenbarung bevorzugter praktischer Ausführungsbeispiele der vorliegenden Erfindung, wobei die vorliegende Erfindung hierdurch jedoch in keiner Weise eine Beschränkung erfährt. Durch einen Fachmann des betreffenden technischen Gebietes ohne Abweichung von Idee und Umfang der vorliegenden Erfindung vorgenommene Abänderungen und Modifikationen fallen sämtlich in den Schutzumfang der vorliegenden Patentanmeldung. Somit ist für den Schutzumfang der vorliegenden Patentanmeldung der durch die Ansprüche begrenzte Umfang maßgeblic.

## Patentansprüche

1. Turbinendruckverstärker-Ölrücklaufrohrleitung, umfassend:
einen eigentlichen Körper des Ölrücklaufrohres (1),
einen Anschlussstutzen (2), welcher einen eigentlichen Körper (21) des Anschlussstutzens aufweist,
**dadurch gekennzeichnet, dass** der Anschlussstutzen (2) außerdem ein sich von dem eigentlichen Körper (21) des Anschlussstutzens erstreckend ausgebildetes Erstreckungsteil aufweist, wobei sich das Erstreckungsteil (22) innerhalb des eigentlichen Körpers (1) des Ölrücklaufrohres (1) befindet und in enger Abstimmung mit dem eigentlichen Körper (1) des Ölrücklaufrohres (1) einen Verbindungsabschnitt (3) ausbildet, wobei der Verbindungsabschnitt (3) mit einem Positionierungsbereich (31) ausgebildet ist und wobei das Endteil des eigentlichen Körpers des Ölrücklaufrohres (1) durch Schweißen an dem Anschlussstutzen (2) befestigt ist, wobei es sich bei dem Positionierungsbereich (31) um eine an der Oberfläche des Verbindungsabschnittes (3) durch Klemmen ausgebildete Aussparung handelt.

2. Turbinendruckverstärker-Ölrücklaufrohrleitung nach Anspruch 1, **dadurch gekennzeichnet, dass** 6 bis 8 der Positionierungsbereiche (31) vorgesehen sind, welche entlang der Umfangsrichtung des Verbindungsabschnitts (3) gleichmäßig angeordnet sind.

3. Turbinendruckverstärker-Ölrücklaufrohrleitung nach Anspruch 1, **dadurch gekennzeichnet, dass** der eigentliche Körper (21) des Anschlussstutzens (2) eine Endfläche (211) aufweist, wobei das Erstreckungsteil (22) als Erstreckung von der betreffenden Endfläche (211) ausgebildet ist, wobei die betreffende Endfläche (211) an der Verbindungsstelle mit dem Erstreckungsteil (22) mit einer Einbuchtungsrille (212) versehen ist, wobei das Endteil des eigentlichen Körpers (21) des Ölrücklaufrohres (1) an der Einbuchtungsrille (212) durch Schweißen an dem Anschlussstutzen (2) befestigt ist.

4. Turbinendruckverstärker-Ölrücklaufrohrleitung nach Anspruch 1, **dadurch gekennzeichnet, dass** die Länge des Erstreckungsteils (22) 8 bis 12 Millimeter beträgt.

5. Turbinendruckverstärker-Ölrücklaufrohrleitung nach Anspruch 1, **dadurch gekennzeichnet, dass** die Dicke des Erstreckungsteils (22) 1 bis 1,5 Millimeter beträgt.

6. Turbinendruckverstärker-Ölrücklaufrohrleitung nach Anspruch 1, **dadurch gekennzeichnet, dass** die Wanddicke des eigentlichen Körpers (1) des Ölrücklaufrohres (1) 0,3 bis 1,2 Millimeter beträgt.

## Claims

1. Turbine pressure-booster oil return pipeline, comprising:
an actual body of the oil return pipe (1),
a connector (2), which comprises an actual body (21) of the connector,
**characterized in that** the connector (2) also comprises an extending part, which is formed as extending from the actual body (21) of the connector, the extending part (22) being located within the actual body (1) of the oil return pipe (1) and forming in close coordination with the actual body (1) of the oil return pipe (1) a connecting portion (3), the connecting portion (3) being formed with a positioning region (31) and the end part of the actual body of the oil return pipe (1) being fastened on the connector (2) by welding, the positioning region (31) being a clearance formed on the surface of the connecting portion (3) by pinching.

2. Turbine pressure-booster oil return pipeline according to Claim 1, **characterized in that** 6 to 8 of the positioning regions (31) are provided, arranged uniformly along the circumferential direction of the connecting portion (3).

3. Turbine pressure-booster oil return pipeline according to Claim 1, **characterized in that** the actual body (21) of the connector (2) has an end face (211), the extending part (22) being formed as an extension of the end face (211) concerned, the end face (211) concerned being provided at the connecting point to the extending part (22) with an indentation channel (212), the end part of the actual body (21) of the oil return pipe (1) being fastened on the connector (2) at the indentation channel (212) by welding.

4. Turbine pressure-booster oil return pipeline according to Claim 1, **characterized in that** the length of the extending part (22) is 8 to 12 millimetres.

5. Turbine pressure-booster oil return pipeline according to Claim 1, **characterized in that** the thickness of the extending part (22) is 1 to 1.5 millimetres.

6. Turbine pressure-booster oil return pipeline according to Claim 1, **characterized in that** the wall thickness of the actual body (1) of the oil return pipe (1) is 0.3 to 1.2 millimetres.

## Revendications

1. Conduite de retour d'huile d'amplificateur de pression de turbine, comprenant:
un corps originel du tube de retour d'huile (1),
un embout de raccordement (2), qui présente un corps originel (21) de l'embout de raccordement,
**caractérisée en ce que** l'embout de raccordement (2) présente par ailleurs une partie d'extension formée en extension à partir du corps originel (21) de l'embout de raccordement, dans laquelle la partie d'extension (22) se trouve à l'intérieur du corps originel (1) du tube de retour d'huile (1) et forme une partie d'assemblage (3) en ajustement étroit avec le corps originel (1) du tube de retour d'huile (1), dans lequel la partie d'assemblage (3) est réalisée avec une zone de positionnement (31), et dans laquelle la partie d'extrémité du corps originel du tube de retour d'huile (1) est fixée par soudage à l'embout de raccordement (2), dans laquelle la zone de positionnement (31) est une découpe formée par serrage sur la surface de la partie d'assemblage (3).

2. Conduite de retour d'huile d'amplificateur de pression de turbine selon la revendication 1, **caractérisée en ce qu'**il est prévu 6 à 8 zones de positionnement (31), qui sont disposées uniformément le long de la direction périphérique de la partie d'assemblage (3).

3. Conduite de retour d'huile d'amplificateur de pression de turbine selon la revendication 1, **caractérisée en ce que** le corps originel (21) de l'embout de raccordement (2) présente une face d'extrémité (211), dans laquelle la partie d'extension (22) est réalisée sous forme d'extension à partir de la face d'extrémité concernée (211), dans laquelle la face d'extrémité concernée (211) est munie au point d'assemblage avec la partie d'extension (22) d'une rainure d'engagement (212), dans laquelle la partie d'extrémité du corps originel (21) du tube de retour d'huile (1) est fixée à l'embout de raccordement (2) par soudage à la rainure d'engagement (212).

4. Conduite de retour d'huile d'amplificateur de pression de turbine selon la revendication 1, **caractérisée en ce que** la longueur de la partie d'extension (22) vaut 8 à 12 millimètres.

5. Conduite de retour d'huile d'amplificateur de pression de turbine selon la revendication 1, **caractérisée en ce que** l'épaisseur de la partie d'extension (22) vaut 1 à 1,5 millimètre.

6. Conduite de retour d'huile d'amplificateur de pression de turbine selon la revendication 1, **caractérisée en ce que** l'épaisseur de paroi du corps originel (1) du tube de retour d'huile (1) vaut 0,3 à 1,2 millimètre.
